# EUROPEAN PATENT SPECIFICATION

(11) **EP 3 244 050 B1**
(45) Date of publication and mention of the grant of the patent: **18.12.2019**
(21) Application number: 15876894.5
(22) Date of filing: 30.03.2015
(51) Int. Cl.: F02F 1/42, F02F 1/24, B22D 18/00

(54) **INTERNAL COMBUSTION ENGINE EQUIPPED WITH A CYLINDER HEAD, AND INTERNAL COMBUSTION ENGINE EQUIPPED WITH A CYLINDER HEAD MANUFACTURING METHOD**
BRENNKRAFTMASCHINE MIT EINEM ZYLINDERKOPF UND VERFAHREN ZUR HERSTELLUNG EINER BRENNKRAFTMASCHINE MIT EINEM ZYLINDERKOPF
MOTEUR À COMBUSTION COMPORTANT UNE TÊTE DE CYLINDRE, ET PROCÉDÉ DE FABRICATION DE MOTEUR À COMBUSTION COMPORTANT UNE TÊTE DE CYLINDRE

(30) Priority: 06.01.2015 JP 2015001056
(43) Date of publication of application: 15.11.2017
(73) Proprietor: Aichi Machine Industry Co., Ltd., Nagoya-shi, Aichi 456-8601 (JP)
(72) Inventor: ABE, Daichi, Nagoya-shi, Aichi 456-8601 (JP); SATAKE, Takashi, Nagoya-shi, Aichi 456-8601 (JP); TOKURA, Koichi, Nagoya-shi, Aichi 456-8601 (JP); IWAMURO, Nobuo, Nagoya-shi, Aichi 456-8601 (JP)
(74) Representative: Global IP Europe Patentanwaltskanzlei
(86) International application number: PCT/JP2015/059917
(87) International publication number: WO 2016/111021

(56) References cited:
- EP-A1- 1 525 935
- WO-A2-2014/060831
- GB-A- 2 169 961
- JP-A- H0 378 552
- JP-A- 2005 076 487
- JP-A- 2009 299 512
- JP-B2- 3 711 699
- JP-U- H0 343 560
- US-A1- 2011 308 237

## Description

### Technical Field

The present invention relates to a combustion engine that includes a cylinder head comprising a bottom wall section having first and second combustion-chamber-configuring recessed sections formed for configuring a combustion chamber, side wall sections configured to surround the bottom wall section, and an attachment part which is provided on one of the side wall sections extending along the arrangement direction of the first and second combustion-chamber-configuring recessed sections for attachment of an intake manifold.

### Background Art

Japanese Unexamined Patent Application Publication No. 2007-309168A (Patent Document1) discloses a cylinder head having a combustion-chamber-configuring recessed section configuring a combustion chamber, a flange plane to which an intake manifold can be attached, and a plurality of intake ports, one end of which opens to the combustion-chamber-configuring recessed section while the other end opens to the flange plane. This cylinder head achieves weight reduction of the cylinder head by forming recessed sections between each intake port on the flange plane.

WO 2014/060831 A2 discloses an internal combustion engine including a cylinder head and an intake manifold, the cylinder head comprising: a bottom wall section having first and second combustion-chamber-configuring recessed sections formed for configuring a combustion chamber; side wall sections configured to surround the bottom wall section; an attachment part which is provided on one of the side wall sections extending along the arrangement direction of the first and the second combustion-chamber-configuring recessed sections for attaching the intake manifold, and has a contact plane that the intake manifold contacts, the intake manifold including an attachment flange section which has a contact plane for contacting the contact plane of the attachment part.

### Citation List

### Patent Literature

Patent Document 1: Japanese Unexamined Patent Application Publication No. 2007 -309168A

### Summary of Invention

### Problem to be Solved by the Invention

Here, a tumble control valve may be attached to the intake manifold for improving the gas flow of the intake, that is, the combustion efficiency, by strengthening tumble flow. In this case, a bearing for rotatably supporting the tumble control valve is disposed between the intake ports. In the cylinder head described above, the recessed section must be formed smaller for the amount of space of the bearing, reducing the effect of weight reduction; there is room for improvement with regard to balancing combustion efficiency improvement and weight reduction.

In light of the foregoing, an object of the present invention is to provide technology that contributes to balancing both combustion efficiency improvement and weight reduction.

### Means for Solving the Problem

The combustion engine including cylinder head according to the attached claim 1 and the method of manufacturing the same according to the appended claim 8 achieve the object described above.

According to a preferable reference example of the cylinder head, a cylinder head is configured to have a bottom wall section, side wall sections, and an attachment part. The bottom wall section has first and second combustion-chamber-configuring recessed sections formed for configuring a combustion chamber. The side wall sections are configured to surround the bottom wall section. The attachment part is provided on one of the side wall sections extending along the arrangement direction of the first and the second combustion-chamber-configuring recessed sections for attaching an intake manifold. Further, the attachment part has a contact plane that the intake manifold contacts. Further, the cylinder head has first and second intake passages that open on one end to the first and the second combustion-chamber-configuring recessed sections and open on the other end to the contact plane. Furthermore, a recessed section is formed in the portion of the attachment part corresponding to the space between the first and the second intake passages, the recessed section opening toward the direction the bottom surface of the bottom wall section is facing.

According to the present reference example, the recessed section is provided so as to open toward the direction that the bottom surface of the bottom wall section is facing, not toward the direction that the contact plane which the intake manifold contacts is facing. With this configuration, even in the case that a tumble control valve is attached to the intake manifold, the size of the recessed section is not limited by a bearing for rotatably supporting the tumble control valve.

This allows a balance of combustion efficiency improvement and weight reduction to be achieved. Also, since the space between the first and the second intake passages can be made thinner by the recessed section, when the cylinder head is formed by casting, the occurrence of shrinkage cavities in the space between the first and the second intake passages can be inhibited. This also contributes to quality improvement.

According to another reference example of the cylinder head, the cylinder head is formed by casting using a mold. Further, the recessed section is configured to be formed by using a part of the mold.

Note that "a part of the mold" in the present reference example typically corresponds to a portion integrally formed with the mold, but it suitably includes a portion formed separate from the mold that is afterward integrated with one body with the mold.

According to the present reference example, the recessed section is formed by casting using a part of a mold which has high thermal conductivity compared to a sand mold including a core. With this configuration, the solidification of the molten metal flowing in the space between the first and the second intake passage can be accelerated. This effectively inhibits the occurrence of shrinkage cavities in the space between the first and the second intake passage.

According to another reference example of the cylinder head, the cylinder head is formed via pressure die casting in which molten metal composed of an aluminum alloy is pressed into a mold.

According to the reference example, the effect of the reference example can be made even more significant in the configuration which forms the cylinder head by pressure die casting, which brings in air and makes it comparatively easy to generate gas defects.

According to another reference example of the cylinder, third and fourth combustion-chamber-configuring recessed sections for configuring a combustion chamber are formed on the bottom wall section, and third and fourth intake passages that open on one end to the third and the fourth combustion-chamber-configuring recessed sections and open on the other end open to the contact plane, are further provided. The third and the fourth combustion-chamber-configuring recessed sections are disposed in series relative to the first and the second combustion-chamber-configuring recessed sections, such that the first and the second combustion-chamber-configuring recessed sections are interposed therebetween. The third and the fourth intake passages are disposed in series relative to the first and the second intake passages, such that the first and the second intake passages are interposed therebetween.

According to the present reference example, the effect of the present reference example can be made even more significant in a cylinder head wherein the rotation shaft of the tumble control valve is required to be supported on both ends and at the center part, along with the four air cylinders being disposed in series.

According to another reference example of the cylinder head, the recessed section is configured to have a recessed groove along the direction of removal of the mold. Here, the recessed groove can be formed by providing a projection part corresponding to the recessed groove on one part of the mold for forming the recessed section by casting. Note that when the mold for forming the recessed section is a movable mold, the "direction of removal of the mold" in the present reference example corresponds to the literal direction that the movable mold is removed from the cylinder head; when the mold is a fixed mold, it corresponds to the direction that the cylinder head is removed from the fixed mold.

According to the present reference example, since the area of the molten metal that flows in the space between the first and the second intake passages contacting the mold increases, solidification can be accelerated. As a result, the occurrence of shrinkage cavities in the space between the first and the second intake passages can be more effectively inhibited.

According to another reference example of the cylinder head, a plurality of the recessed grooves are formed. According to the present embodiment, since the area of the molten metal that flows in the space between the first and the second intake passages contacting the mold increases further, solidification can be further accelerated. As a result, the occurrence of shrinkage cavities in the space between the first and the second intake passages can be further effectively inhibited.

According to a preferable reference example of an internal combustion engine, the cylinder head according to any one of the reference examples described above and injectors attached to the first and the second intake passages of the cylinder head are provided. The internal combustion engine is configured to inject fuel from the injectors toward the intake flowing through the first and the second intake passages of the cylinder head, and introduce the mixed gas of the intake and the fuel into the combustion chamber.

According to the present reference example, since the cylinder head according to one of the reference examples described above is equipped, the same effect as the effect exhibited by the cylinder head of the present reference example can be exhibited, for example, the effect of being able to achieve balance of combustion efficiency improvement and weight reduction, and the effect of being able to achieve an improvement in quality. This allows for an improvement in fuel economy of an internal combustion engine, and weight reduction and quality improvement in an internal combustion engine itself to be achieved.

According to another reference example of the internal combustion engine, the first and the second combustion-chamber-configuring recessed sections each have two intake ports. Also, the first and the second intake passages each have a branching passage part communicating with two intake ports. Further, an injector is disposed at each branching passage.

According to the present reference example, the fuel injection amount from each injector can be controlled according to the intake flow rate passing through each branching passage part. This allows for the prevention of excess fuel being injected into each intake port. As a result, an improvement in fuel efficiency can be achieved.

According to a preferable reference example of the cylinder head manufacturing method, a cylinder head comprises a bottom wall section having first and second combustion-chamber-configuring recessed sections formed for configuring a combustion chamber, side wall sections configured to surround the bottom wall section, and an attachment part which is provided on one of the side wall sections extending along the arrangement direction of the first and the second combustion-chamber-configuring recessed sections and has a contact plane that an intake manifold contacts. The cylinder head is formed by casting using a mold. First and second intake passages are formed that open on one end to the first and the second combustion-chamber-configuring recessed sections and open on the other end to the contact plane, and a recessed section is formed in the space between the first and the second intake passages by using a part of the mold, the recessed section opening toward the direction the bottom wall section is facing.

According to the reference example, the recessed section opens toward the direction that the bottom wall section faces, not toward the direction that the contact plane which the intake manifold contacts faces. With this configuration, even when a tumble control valve is attached to the intake manifold, the size of the recessed section is not limited by a bearing for rotatably supporting the tumble control valve. This allows a balance of combustion efficiency improvement and weight reduction to be achieved. Also, since the space between the first and the second intake passages can be made thinner by the recessed section, when the cylinder head is formed by casting, the occurrence of shrinkage cavities in the space between the first and the second intake passages can be inhibited. Furthermore, the recessed section is formed by one part of the mold. With this configuration, the occurrence of shrinkage cavities can be more effectively inhibited by accelerating the solidification of molten metal flowing in the space between the first and the second intake passages. This also contributes to quality improvement.

### Effect of the Invention

According to the present invention, technology that contributes to balancing both combustion efficiency improvement and weight reduction can be provided.

### Brief Description of Drawings

FIG. 1 is a schematic configuration view illustrating an overview of a configuration of an internal combustion engine 1 with a cylinder head 20 installed thereon according to an embodiment of the present invention installed thereon.
FIG. 2 is a side view of the cylinder head 20 from the side.
FIG. 3 is a cross-sectional view of A-A in FIG. 2.
FIG. 4 is a cross-sectional view of B-B in FIG. 2.
FIG. 5 is a rear view of the cylinder head 20 from the direction of the arrow V of FIG. 2.
FIG. 6 is a cross-sectional view of C-C in FIG. 5.
FIG. 7 is a configuration diagram illustrating an outline of the configuration of the mold 80.
FIG. 8 is a descriptive view illustrating how the recessed section 35 is formed by using a mold.
FIG. 9 is a front view of the intake manifold 4 from the direction of the attachment plane 40 for the cylinder head 20.
FIG. 10 is an enlarged view illustrating enlarged main components of a cylinder head 20A of a modified example.

### Mode for Carrying Out the Invention

A mode for carrying out the present invention will be described below with reference to examples.

### Example 1

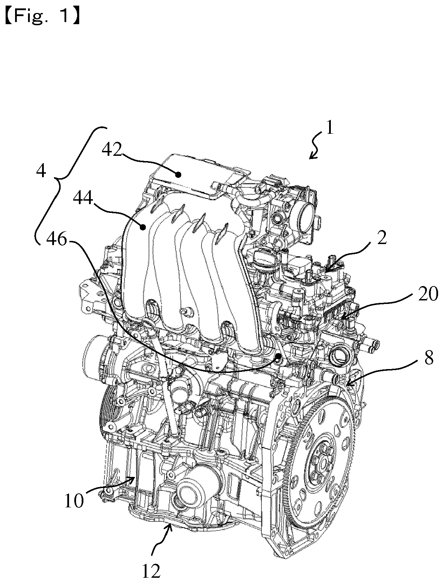

As illustrated in FIG. 1, an internal combustion engine 1 with a cylinder head 20 according to the present embodiment installed thereon comprises the cylinder head 20 according to the present embodiment, a locker cover 2 attached to the upper part of the cylinder head 20, an intake manifold 4 attached to the side walls of the cylinder head 20, a cylinder block 8 attached to the lower part of the cylinder head 20, an upper oil pan 10 attached to the lower part of the cylinder block 8, and a lower oil pan 12 attached to the lower part of the upper oil pan 10. Note that in the present embodiment, for convenience, the side of the locker cover 2, that is, the upward direction of the paper in FIG. 1 is defined as the "upper side" and "the upward direction"; the side of the lower oil pan 12, that is, the downward direction of the paper in FIG. 1 is defined as the "lower side" and "the downward direction".

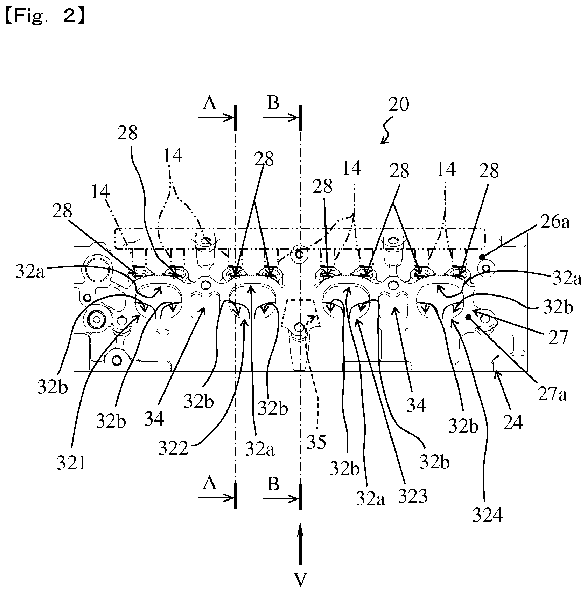

As illustrated in FIG. 2 to FIG. 6, the cylinder head 20 is configured from an upper deck 22, a lower deck 24, and side walls 26, which connects to the upper deck 22 and the lower deck 24, and forms the outer block of the cylinder head 20. The cylinder head 20 is formed by pressure die casting using an aluminum alloy.

The portion of the cylinder head 20 that is upward of the upper deck 22 is formed with a valve mechanism chamber VMC for accommodating (not illustrated) the disposed intake and exhaust cam valve shaft, an intake and exhaust valve, a valve lifter, and the like. The lower deck 24 is an example of an implemented configuration corresponding to the "bottom wall section" of the present invention.

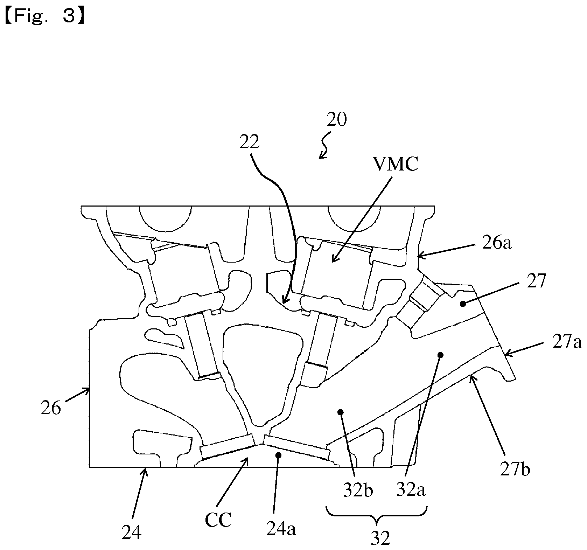

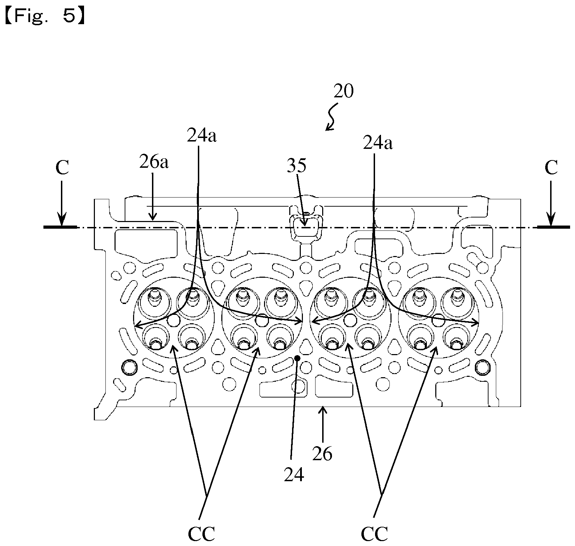

As illustrated in FIG. 3 and FIG. 5, the lower deck 24 is formed with a combustion-chamber-configuring recessed section 24a, configuring a combustion chamber CC. Also, as illustrated in FIG. 2 to FIG. 4, an attachment part 27 for attaching the intake manifold 4 is formed on one side wall 26a of the side walls 26 configured to be along the combustion chamber arrangement direction. The combustion-chamber-configuring recessed section 24a is an example of an implemented configuration corresponding to the "first combustion-chamber-configuring recessed section", the "second combustion-chamber-configuring recessed section", the "third combustion-chamber-configuring recessed section", and the "fourth combustion-chamber-configuring recessed section"; the one side wall 26a corresponds to the "side wall section" of the present invention.

As illustrated in FIG. 2, the attachment part 27 has a contact plane 27a, contacted by the intake manifold 4. Also, as illustrated in FIG. 2 and FIG. 3, the contact plane 27a is formed with an intake passage 32, one end of which opens to the combustion-chamber-configuring recessed section 24a. Note that for convenience in description, the intake passage 32 is defined as a first intake passage 321, a second intake passage 322, a third intake passage 323, and a fourth intake passage 324 in the order from the left side in FIG. 2. The second intake passage 322 and the third intake passage 323 corresponds to the "first intake passage" and the "second intake passage", and the first intake passage 321 and the fourth intake passage 324 are examples of an implemented configuration and correspond to the "third intake passage" and the "fourth intake passage" of the present invention.

The intake passage 32, as illustrated in FIG. 2 and FIG. 3, is configured from a collective passage 32a formed on the upstream side (the right direction in FIG. 3) of the intake flow direction, and two branched passages 32b, which branch out from the collective passage 32a and communicate independently with the combustion-chamber-configuring recessed section 24a.

The collective passage 32a is formed with an elliptical cross-sectional shape perpendicular to the passage longitudinal direction (the intake flow direction). Also, the cross-sectional shape of the branching passage 32b perpendicular to the passage longitudinal direction (the intake flow direction) has an elliptical shape at the branching part from the collective passage 32a, and gradually changes going toward the combustion-chamber-configuring recessed section 24a from the branching part, and in the end, becomes a circular shape and opens to the combustion-chamber-configuring recessed section 24a.

As illustrated in FIG. 2, an injector attachment hole 28 for attaching the injector 14 is formed on the upper portion (upper side of FIG. 2) of the attachment part 27. As illustrated in FIG. 3, the injector attachment hole 28 is formed piercing from the upper portion of the attachment part 27 to the intake passage 32. There are two injector attachment holes 28 formed on each intake passage 32.

That is, the cylinder head 20 is configured in what is known as a dual injector type, wherein one injector 14 is attached to each branching passage 32b.

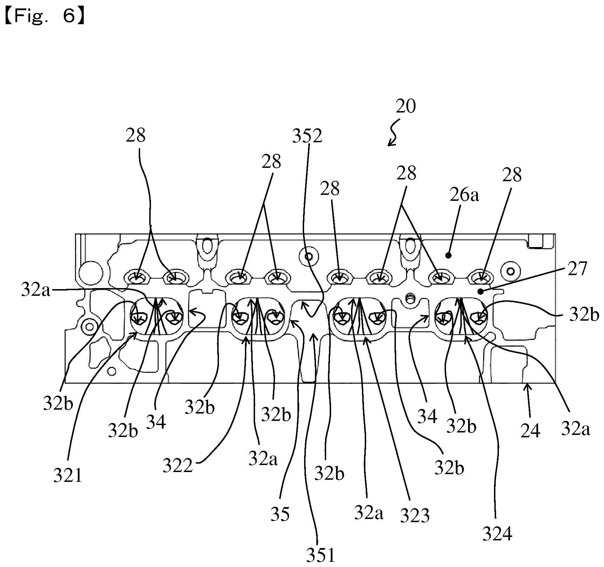

Further, a recessed section 34 is formed between the first intake passage 321 and the second intake passage 322, and between the third intake passage 323 and the fourth intake passage 324 on the contact plane 27a, as illustrated in FIG. 2 and FIG. 6. That is, the recessed section 34 opens to the contact plane 27a.

A recessed section 35 is formed between the second intake passage 322 and the third intake passage 323 on a lower wall section 27b configuring the lower portion of the attachment part 27, as illustrated in FIG. 2 and FIGS. 4, 5, 6. That is, the recessed section 35 opens toward the direction that the bottom surface of the lower deck 24 faces (downward in FIG. 2). As illustrated in FIG. 5, the recessed section 35 is formed in a substantially rectangular shape in a plane view. The lower deck 24 is an example of an implemented configuration corresponding to the "bottom wall section" of the present invention.

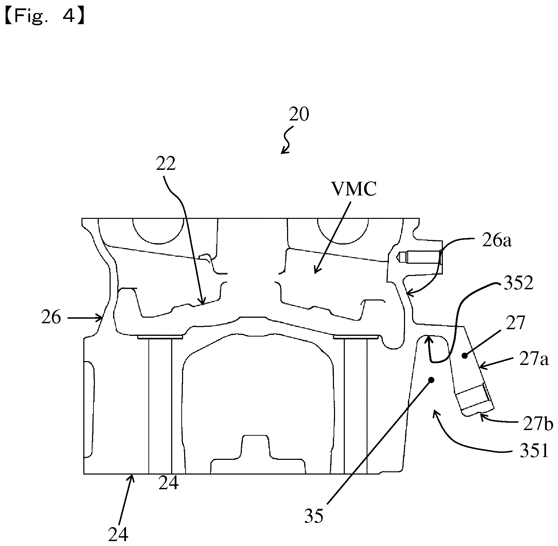

The recessed section 35 is formed in a tapered shape such that the cross-sectional area gets smaller toward a bottom surface section 352 from an opening section 351, as illustrated in FIG. 2 and FIG. 4. Note that the taper angle of the recessed section 35 is determined by the taper shape of a core section 84a provided on a lower mold 84 of the mold 80, described hereinafter. The recessed section 35 is an example of an implemented configuration corresponding to the "recessed section" of the present invention.

In this manner, weight reduction of the cylinder head 20 itself can be achieved by forming the recessed sections 34, 35 between each intake passage 32. Also, in general, due to this structure, the space between each intake passage 32 becomes thick, thereby slowing down the solidification of the molten metal and making it easier for shrinkage holes (shrinkage cavities) to occur. However, since the recessed sections 34, 35 are formed, the thickness of the space between each intake passage 32 can be made thinner, allowing the occurrence of shrinkage holes (shrinkage cavities) to be inhibited. By this, quality improvement can be achieved.

The recessed section 35 opens in the lower wall section 27b of the attachment part 27, not in the contact plane 27a like the recessed section 34. Note that the cause of the configuration is to inhibit the occurrence of shrinkage holes (shrinkage cavities), and is also due to the shape (a contact plane 46a, described hereinafter) of the intake manifold 4 that contacts the contact plane 27a. The details of the structure of the intake manifold 4 are given hereinafter.

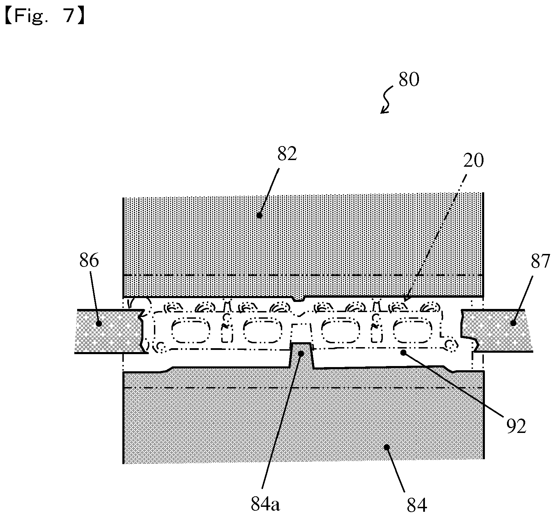

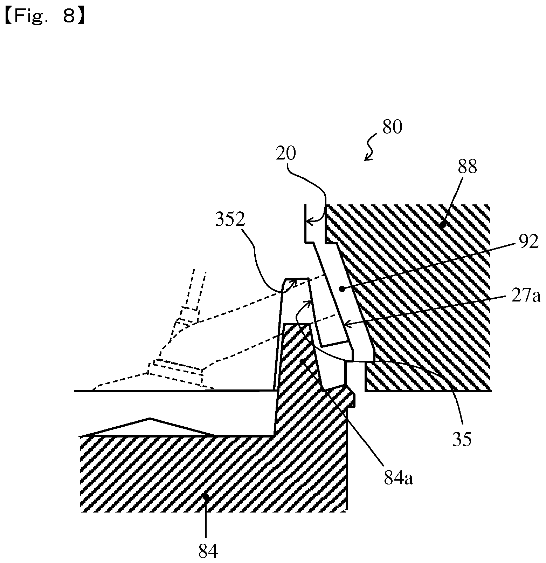

Here, the forming method of the recessed section 35 is described. The recessed section 35 is formed by using the mold 80, as illustrated in FIG. 7 and FIG. 8. The mold 80 is configured primarily from an upper mold 82, a lower mold 84, and three slide cores 86, 87, 88, as illustrated in FIG. 7.

A core section 84a, which is integrally formed so as to protrude upward (upward in FIG. 7), is formed on the lower mold 84, as illustrated in FIG. 7 and FIG. 8. The core section 84a is formed in a tapered shape such that the outer shape gets smaller going toward the tip end portion. The taper angle of the core section 84a is set to an angle such that the cylinder head 20 is easily removed from the lower mold 84 when opening the mold after forming the cylinder head 20. The core part 84a is an example of an embodiment corresponding to the "part of the mold" of the present invention.

As illustrated in FIG. 7, a cavity is configured for forming the cylinder head 20 by the mold 80 being clamped. The core section 84a is disposed in an attachment-part-forming cavity 92, which is for forming the attachment part 27 of the cavities when clamping. Then, by flowing molten metal of an aluminum alloy into a cavity at high pressure after clamping, a cylinder head 20 having a recessed section 35 on the attachment part 27 is formed.

In this manner, the recessed section 35 is formed by using the core section 84a provided on the lower mold 84 of the mold 80. With this configuration, the solidification of the molten metal flowing into the space between the second intake passage 322 and the third intake passage 323 can be accelerated compared to a configuration wherein the recessed section 35 is formed by using a sand mold including a core. By this, the occurrence of shrinkage holes (shrinkage cavities) in the space between the second intake passage 322 and the third intake passage 323 can be effectively inhibited.

Note that in the present embodiment, the recessed section 34 had a configuration wherein it was formed by a recessed-section-forming protruding part (not illustrated) integrally formed with an intake-passage-forming sand core for forming the intake passage 32. As for the forming method of the recessed section 34, it is not central to the present invention, and a detailed description is omitted.

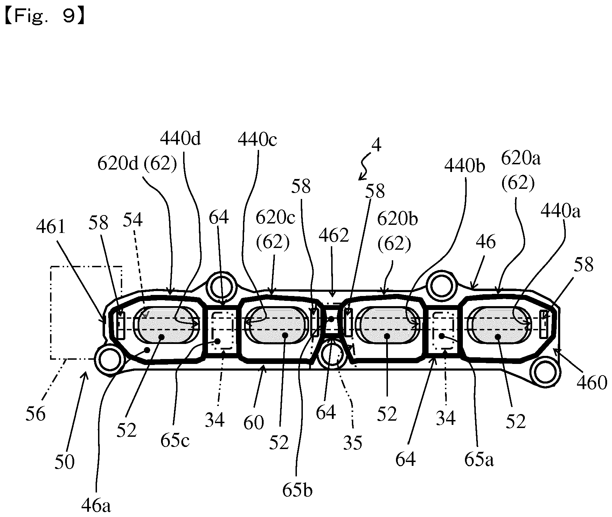

As illustrated in FIG. 1, the intake manifold 4 is configured from a surge tank 42, four branch pipes 44 provided extending from the surge tank 42, and an attachment flange section 46. As illustrated in FIG. 9, the attachment flange section 46 has a contact plane 46a for contacting the contact plane 27a of the attachment part 27 on the cylinder head 20.

The intake manifold 4 is attached to the cylinder head 20 by attaching the attachment flange section 46 to the attachment part 27 on the cylinder head 20 using a fastening member such as a bolt (not illustrated). This connects for communication each branch pipe 44 to each intake passage 32, and intake (air) is supplied from the surge tank 42 through the branch pipes 44 and the intake passages 32 to the combustion chamber CC. Note that a seal member 60 is disposed between the contact plane 27a and the contact plane 46a.

As illustrated in FIG. 9, a tumble control valve device 50 is provided on the attachment flange section 46. The tumble control valve 50 is configured from a valve member 52, a valve shaft 54 for supporting the valve member 52, and an actuator 56 for rotationally driving the valve member 52 via the valve shaft 54. The tumble control valve device 50 can generate vertical vortex (tumble) flow in the mixed gas (mixed gas of fuel and air) supplied in the combustion chamber CC, thereby accelerating combustion.

As illustrated in FIG. 9, the valve shaft 54 is rotatably supported by a bearing member 58. The bearing member 58 is disposed on both ends 460, 461 and a center section 462 of the contact plane 46a; specifically, of each opening 440 of the four branch pipes 44 on the plane of the paper of FIG. 9, the right portion of a first opening 440a corresponding to the first intake passage 321; the left portion of a second opening 440b corresponding to the second intake passage 322; the right portion of a third opening 440c corresponding to the third intake passage 323; and the left portion of a fourth opening 440d corresponding to the fourth intake passage 324 on the cylinder head 20. That is, there are two bearing members 58 disposed next to each other in the center section 462. In this manner, the valve shaft 54 is supported at four points by four bearing members 58.

As illustrated in FIG. 9, the seal member 60 is configured from four surrounding parts 62 configured in a ring shape so as to surround each opening 440 of the four branch pipes 44, and a connecting part 64 for connecting each surrounding part 62.

As illustrated in FIG. 9, the surrounding part 62 is configured to surround the bearing member 58 in addition to each opening 440 of the four branch pipes 44, thereby preventing leakage of intake flowing in the branch pipes 44 to the exterior and preventing entry of miscellaneous things into the interior from the exterior.

As illustrated in FIG. 9, the connecting part 64 is formed in a straight line shape, and connects the upper (upward in FIG. 9) portions and lower (downward in FIG. 9) portions of neighboring surrounding parts 62, respectively. This configures an interior region 65 between the top and bottom connecting parts 64, surrounded on top and bottom by two connecting parts 64 and surrounding parts 62.

Here, for convenience in description, if each surrounding part 62 for surrounding each opening 440a, 440b, 440c, and 440d are defined as a first surrounding part 620a, a second surrounding part 620b, a third surrounding part 620c, and a fourth surrounding part 620d, respectively; and the interior region 65 configured from the connecting part 64, the first surrounding part 620a, and the second surrounding part 620b is defined as a first interior region 65a; the interior region 65 configured from the connecting part 64, the second surrounding part 620b, and the third surrounding part 620c is defined as a second interior region 65b; and the interior region 65 configured from the connecting part 64, the third surrounding part 620c, and the fourth surrounding part 620d is defined as a third interior region 65c; the second interior region 65b is smaller than the first interior region 65a and the third interior region 65c.

This is because the second surrounding part 620b is formed expanding toward the third opening 440c in order to seal the bearing member 58 in addition to the second opening 440b, and the third surrounding part 620c is formed expanding toward the second opening 440b in order to seal the bearing member 58 in addition to the third opening 440c, and are thus close to each other.

Note that when the intake manifold 4 is attached to the cylinder head 20, the two recessed sections 34 opening in the contact plane 27a are disposed in the first interior region 65a and the third interior region 65c configured from the seal member 60, as illustrated in FIG. 9. Thus, a decline in sealing properties due to forming the recessed sections 34 on the contact plane 27a can be prevented.

Meanwhile, sealing properties do not decline between the second intake passage 322 and the third intake passage 323 on the contact plane 27a, since no recessed section is formed.

According to the cylinder head 20 according to the present embodiment described above, in the space between the second intake passage 322 and the third intake passage 323 of the spaces between each intake passage 32, the recessed sections 35 are provided in the lower wall section 27b of the attachment part 27 so as to open toward the direction the lower deck 24 is facing, not in the contact plane 27a. With this configuration, the size of the recessed section 35 is not limited even when a tumble control valve device 50 is provided on the attachment flange section 46 of the intake manifold 4 and the bearing member 58 that rotatably supports the valve shaft 54 is disposed between the second intake passage 322 and the third intake passage 323. This allows a balance of combustion efficiency improvement and weight reduction of the internal combustion engine 1 to be achieved.

### Example 2

A cylinder head 20A of a second example is described next. The cylinder head 20A of the second example has the same configuration as the configuration of the cylinder head 20 described using FIG. 1 to FIG. 6 except for the point that the recessed section 35 is exchanged for a recessed section 35A. Thus, in order to avoid redundant description, the same symbols are given to configurations of the cylinder head 20A of the second example that are the same configuration as the cylinder head 20 of the first example, and their illustrations in figures and descriptions are omitted.

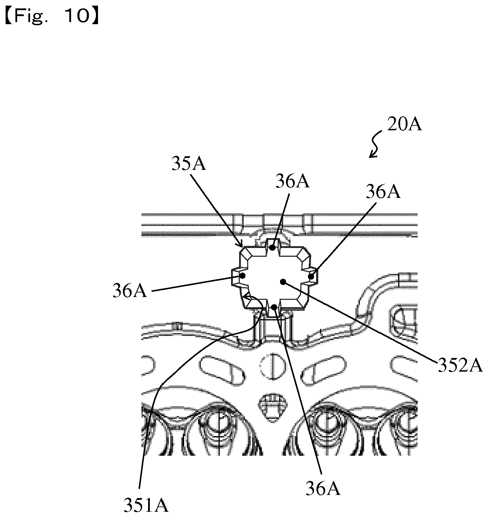

As illustrated in FIG. 10, in the cylinder head 20A of the second example, a recessed section 35A is formed in the space between the second intake passage 322 and the third intake passage 323 of the lower wall section 27b that configures the lower portion of the attachment part 27.

The recessed section 35A opens toward the direction that the lower deck 24 is facing (downward in FIG. 2). Also, as illustrated in FIG. 10, the recessed section 35A is formed in a substantially rectangular shape in a plane view, and the four side walls configuring the inner peripheral surface each have a recessed groove 36A formed thereon.

As illustrated in FIG. 10, the recessed grooves 36A are configured to extend from an opening part 351A of the recessed section 35A to a bottom surface section 352A along the depth direction of the recessed section 35A. Although an illustration is omitted, the recessed groove 36A is formed by providing a protrusion along the height direction of the core section 84a on the outer peripheral surface of the core section 84a on the lower mold 84 of the mold 80.

Note that the protrusion is formed having a slant angle, which is substantially the same angle as the taper angle of the core section 84a. This allows the reduction of removability of the cylinder head 20Afrom the lower mold 84 when opening the mold after forming the cylinder head 20A to be prevented.

According to the cylinder head 20 of the second example described above, the recessed section 35A is formed by the core section 84a having a plurality of protrusions. With this configuration, when forming the cylinder head 20A by casting, the molten metal that flows into the space between the second intake passage 322 and the third intake passage 323 can be made to contact the mold 80 with a greater contact area.

This can further accelerate the solidification of the molten metal flowing into the space between the second intake passage 322 and the third intake passage 323. As a result, the occurrence of shrinkage cavities in the space between the second intake passage 322 and the third intake passage 323 can be more effectively inhibited.

The cylinder head 20A of the second example was configured to be provided with a plurality of recessed grooves 36A, but it may be configured to be provided with only one recessed groove 36A.

In each embodiment, only the recessed section 35 provided in the space between the second intake passage 322 and the third intake passage 323 was configured to open toward the direction that the lower deck 24 is facing, but the recessed section 34 provided in the space between the first intake passage 321 and the second intake passage 322 or the recessed section 34 provided in the space between the third intake passage 323 and the fourth intake passage 324 may also be configured to open toward the direction that the lower deck 24 is facing.

In this case, the core section 84a should be provided in the position corresponding to the space between the first intake passage 321 and the second intake passage 322 or the position corresponding to the space between the third intake passage 323 and the fourth intake passage 324 on the lower mold 84.

In each embodiment, the recessed section 35 was configured to open toward the direction that the lower deck 24 is facing, that is, the direction facing downward. However, the recessed section 35 may be configured to open toward the direction that the upper deck 22 is facing, that is, the direction facing upward. In this case, it should be configured so that a core section protruding toward the downward direction is provided on the upper mold 82 instead of the core section 84a.

In each embodiment, it was configured so that the core section 84a and the lower mold 84 were integrally formed; however, it may be configured so that the core section 84a and the lower mold 84 are separately formed, and then integrated into one body.

In each embodiment, it was configured so that what is known as a twin injector type was adopted, wherein two of the injectors 14 were attached to each intake passage 32 as cylinder heads 20, 20A, but it may be configured so that a normal type is adopted wherein one injector 14 is attached to each intake passage 32.

The present embodiment illustrates one example of embodiments of the present invention. Accordingly, the present invention is not limited to the configuration of the present embodiment.

### Reference Signs List

- 1: Internal combustion engine (internal combustion engine)
- 2: Locker cover
- 4: Intake manifold (intake manifold)
- 8: Cylinder block
- 10: Upper oil pan
- 12: Lower oil pan
- 14: Injector
- 20: Cylinder head (cylinder head)
- 20A: Cylinder head (cylinder head)
- 22: Upper deck
- 24: Lower deck (bottom wall section)
- 24a: Combustion-chamber-configuring recessed section (first combustion-chamber-configuring recessed section, second combustion-chamber-configuring recessed section, third combustion-chamber-configuring recessed section, and fourth combustion-chamber-configuring recessed section)
- 26: Side wall
- 26a: One side wall (side wall section)
- 27: Attachment part (attachment part)
- 27a: Contact plane (contact plane)
- 27b: Lower wall section
- 28: Injector attachment hole
- 32: Intake passage
- 32a: Collective passage
- 32b: Branching passage
- 34: Recessed section
- 35: Recessed section (recessed section)
- 35A: Recessed section (recessed section)
- 36A: Recessed groove (recessed groove)
- 42: Surge tank
- 44: Branch pipe
- 46: Attachment flange section
- 46a: Contact plane
- 50: Tumble control valve device
- 52: Valve member
- 54: Valve shaft
- 56: Actuator
- 58: Bearing member
- 60: Seal member
- 62: Surrounding part
- 64: Connecting part
- 65: Interior region
- 65a: First interior region
- 65b: Second interior region
- 65c: Third interior region
- 80: Mold (mold)
- 82: Upper mold
- 84: Lower mold
- 84a: Core section (one part of the mold)
- 86: Slide core
- 87: Slide core
- 88: Slide core
- 92: Attachment-part-forming cavity
- 321: First intake passage (third intake passage)
- 322: Second intake passage (first intake passage)
- 323: Third intake passage (second intake passage)
- 324: Fourth intake passage (fourth intake passage)
- 351: Opening
- 351A: Opening
- 352: Bottom surface section
- 352A: Bottom surface section
- 440: Opening
- 440a: First opening
- 440b: Second opening
- 440c: Third opening
- 440d: Fourth opening
- 460: Both ends
- 461: Both ends
- 462: Center section
- 620a: First surrounding part
- 620b: Second surrounding part
- 620c: Third surrounding part
- 620d: Fourth surrounding part
- VMC: Valve mechanism chamber
- CC: Combustion chamber

## Claims

1. An internal combustion engine (1) including a cylinder head (20, 20A) and an intake manifold (4),
the cylinder head comprising:
a bottom wall section (24) having first and second combustion-chamber-configuring recessed sections (24a) formed for configuring a combustion chamber (CC);
side wall sections (26) configured to surround the bottom wall section;
an attachment part (27) which is provided on one (26a) of the side wall sections extending along the arrangement direction of the first and the second combustion-chamber-configuring recessed sections for attaching the intake manifold (4), and has a contact plane (27a) that the intake manifold contacts,
the intake manifold including
an attachment flange section (46) which has a contact plane (46a) for contacting the contact plane of the attachment part, wherein, a tumble control valve device (50) is provided on the attachment flange section of the intake manifold, the tumble control valve being configured from a valve member (52), a valve shaft (54) for supporting the valve member, and an actuator (56) for rotationally driving the valve member via the valve shaft;
the intake manifold has a bearing member (58) that rotatably supports the valve shaft;
first and second intake passages (322, 323) are provided that open on one end to the first and the second combustion-chamber-configuring recessed sections and open on the other end to the contact plane, such that the bearing member of the intake manifold is disposed between the first intake passage and the second intake passage when intake manifold is attached to the attachment part; and
a recessed section (35) is formed in the portion of the attachment part corresponding to a space between the first and the second intake passages, the recessed section opening toward the direction a bottom surface of the bottom wall section is facing.

2. The internal combustion engine (1) according to claim 1, wherein
the cylinder head (20, 20A) is formed by casting using a mold (80), and
the recessed section (35) is configured to be formed by using a part of the mold.

3. The internal combustion engine (1) according to claim 2, wherein
the cylinder head (20, 20A) is formed via pressure die casting in which molten metal composed of an aluminum alloy is pressed into the mold (80).

4. The internal combustion engine (1) according to any one of claims 1 to 3, wherein
the cylinder head (20, 20A) further comprises:
third and fourth combustion-chamber-configuring recessed sections (24a) for configuring a combustion chamber (CC), formed on the bottom wall section (24); and
third and fourth intake passages (321, 324), which open on one end to the third and the fourth combustion-chamber-configuring recessed sections, and open on the other end to the contact plane (27a),
wherein
the third and the fourth combustion-chamber-configuring recessed sections are disposed in series relative to the first and the second combustion-chamber-configuring recessed sections (24a), such that the first and the second combustion-chamber-configuring recessed sections are interposed therebetween, and
the third and the fourth intake passages are disposed in series relative to the first and the second intake passages (322, 323), such that the first and the second intake passages are interposed therebetween.

5. The internal combustion engine (1) according to any one of claims 2 to 4, wherein
the recessed section (35) is configured to have a recessed groove (35A) along the direction of removal of the mold (80).

6. The internal combustion engine (1) according to claim 5, wherein
a plurality of the recessed grooves (35A) are formed.

7. The internal combustion engine (1) according to any one of claims 1 to 6, further comprising
injectors (14) attached to the first and the second intake passage (322, 323) of the cylinder head,
wherein
the internal combustion engine is configured to inject fuel from the injectors toward the intake flowing through the first and the second intake passages of the cylinder head, and introduce the mixed gas of the intake and the fuel into the combustion chamber (CC).

8. A method of manufacturing an internal combustion engine (1) including a cylinder head (20, 20A) and an intake manifold,
the cylinder head comprising
a bottom wall section (24) having first and second combustion-chamber-configuring recessed sections (24a) formed for configuring a combustion chamber (CC), side wall sections (26) configured to surround the bottom wall section, and an attachment part (27) which is provided on one (26a) of the wall sections extending along the arrangement direction of the first and the second combustion-chamber-configuring recessed sections and has a contact plane (27a) that an intake manifold (4) contacts, the intake manifold including
an attachment flange section (46) which has a contact plane (46a) for contacting the contact plane of the attachment part, comprising the steps of preparing the intake manifold that has
a tumble control valve device (50) provided on the attachment flange section of the intake manifold, the tumble control valve being configured from a valve member (52), a valve shaft (54) for supporting the valve member, and an actuator (56) for rotationally driving the valve member via the valve shaft, and
a bearing member (58) that rotatably supports the valve shaft and disposed so as to be disposed between the first intake passage and the second intake passage when intake manifold is attached to the attachment part;
forming the cylinder head by casting using a mold (80) by
forming first and second intake passages (322, 323) that open on one end to the first and the second combustion-chamber-configuring recessed sections, and open on the other end to the contact plane, and
forming a recessed section (35) in the portion of the attachment part corresponding to a space between the first and the second intake passages by using a part of the mold, the recessed section opening toward the direction the bottom surface of the bottom wall section is facing; and
attaching the intake manifold to the cylinder head.

## Patentansprüche

1. Verbrennungsmotor (1), der einen Zylinderkopf (20, 20A) und einen Ansaugkrümmer (4) aufweist,
wobei der Zylinderkopf aufweist:
einen Bodenwandabschnitt (24), der einen ersten und zweiten brennraumkonfigurierenden ausgesparten Abschnitt (24a) aufweist, die zum Konfigurieren eines Brennraums (CC) ausgebildet sind;
Seitenwandabschnitte (26), die konfiguriert sind, den Bodenwandabschnitt zu umgeben;
einen Befestigungsteil (27), der an einem (26a) der Seitenwandabschnitte vorgesehen ist, der sich zum Befestigen des Ansaugkrümmers (4) längs der Anordnungsrichtung des ersten und des zweiten brennraumkonfigurierenden ausgesparten Abschnitts erstreckt und eine Kontaktfläche (27a) aufweist, mit der der Ansaugkrümmer in Kontakt steht,
wobei der Ansaugkrümmer aufweist:
einen Befestigungsflanschabschnitt (46), der eine Kontaktfläche (46a) zum Berühren der Kontaktfläche des Befestigungsteils aufweist,
wobei
eine Wirbelsteuerventilvorrichtung (50) am Befestigungsflanschabschnitt des Ansaugkrümmers vorgesehen ist, wobei das Wirbelsteuerventil aus einem Ventilelement (52), einem Ventilschaft (54) zum Halten des Ventilelements und einem Antriebselement (56) zum drehenden Antreiben des Ventilelements über den Ventilschaft konfiguriert ist;
der Ansaugkrümmer ein Lagerelement (58) aufweist, das den Ventilschaft drehbar hält;
ein erster und zweiter Einlasskanal (322, 323) vorgesehen sind, die sich an einem Ende zum ersten und zweiten brennraumkonfigurierenden ausgesparten Abschnitt öffnen und sich am anderen Ende zur Kontaktfläche öffnen, so dass das Lagerelement des Ansaugkrümmers zwischen dem ersten Einlasskanal und dem zweiten Einlasskanal angeordnet ist, wenn der Ansaugkrümmer am Befestigungsteil befestigt ist; und
ein ausgesparter Abschnitt (35) in dem Abschnitt des Befestigungsteils ausgebildet ist, der einem Raum zwischen dem ersten und dem zweiten Einlasskanal entspricht, wobei sich der ausgesparte Abschnitt in die Richtung öffnet, in die eine Bodenfläche des Bodenwandabschnitts weist.

2. Verbrennungsmotor (1) nach Anspruch 1, wobei der Zylinderkopf (20, 20A) durch Gießen unter Verwendung einer Form (80) gebildet wird, und
der ausgesparte Abschnitt (35) konfiguriert ist, unter Verwendung eines Teils der Form gebildet zu werden.

3. Verbrennungsmotor (1) nach Anspruch 2, wobei
der Zylinderkopf (20, 20A) mittels Druckgießen gebildet wird, wobei eine Metallschmelze, die aus einer Aluminiumlegierung besteht, in die Form (80) gepresst wird.

4. Verbrennungsmotor (1) nach einem der Ansprüche 1 bis 3, wobei
der Zylinderkopf (20, 20A) ferner aufweist:
einen dritten und vierten brennraumkonfigurierenden ausgesparten Abschnitt (24a) zum Konfigurieren eines Brennraums (CC), der am Bodenwandabschnitt (24) ausgebildet ist; und
einen dritten und vierten Einlasskanal (321, 324), die sich an einem Ende zum dritten und vierten brennraumkonfigurierenden ausgesparten Abschnitt öffnen, und sich am anderen Ende zur Kontaktfläche (27a) öffnen,
wobei
der dritte und vierte brennraumkonfigurierende ausgesparte Abschnitt relativ zum ersten und zweiten brennraumkonfigurierenden ausgesparten Abschnitt (24a) in Reihe angeordnet sind, so dass der erste und der zweite brennraumkonfigurierende ausgesparte Abschnitt dazwischen angeordnet sind, und
der dritte und der vierte Einlasskanal relativ zum ersten und zweiten Einlasskanal (322, 323) in Reihe angeordnet sind, so dass der erste und der zweite Einlasskanal dazwischen angeordnet sind.

5. Verbrennungsmotor (1) nach einem der Ansprüche 2 bis 4, wobei
der ausgesparte Abschnitt (35) so konfiguriert ist, dass er längs der Richtung der Entfernung der Form (80) eine ausgesparte Nut (35A) aufweist.

6. Verbrennungsmotor (1) nach Anspruch 5, wobei mehrere der ausgesparten Nuten (35A) ausgebildet sind.

7. Verbrennungsmotor (1) nach einem der Ansprüche 1 bis 6, der ferner aufweist:
Injektoren (14), die am ersten und zweiten Einlasskanal (322, 323) des Zylinderkopfes angebracht sind,
wobei
der Verbrennungsmotor konfiguriert ist, Kraftstoff aus den Injektoren zur Ansaugluft einzuspritzen, die durch den ersten und zweiten Einlasskanal des Zylinderkopfes strömt, und das Mischgas der Ansaugluft und des Kraftstoffs in den Brennraum (CC) einzuleiten.

8. Verfahren zum Herstellen eines Verbrennungsmotors (1), der einen Zylinderkopf (20, 20A) und einen Ansaugkrümmer aufweist,
wobei der Zylinderkopf aufweist:
eine Bodenwandabschnitt (24), der einen ersten und zweiten brennraumkonfigurierenden ausgesparten Abschnitt (24a) aufweist, die zum Konfigurieren eines Brennraums (CC) ausgebildet sind, Seitenwandabschnitte (26), die konfiguriert sind, den Bodenwandabschnitt zu umgeben, und einen Befestigungsteil (27), der an einem (26a) der Wandabschnitte vorgesehen ist, der sich längs der Anordnungsrichtung des ersten und des zweiten brennraumkonfigurierenden ausgesparten Abschnitts erstreckt und eine Kontaktfläche (27a) aufweist, mit der ein Ansaugkrümmer (4) in Kontakt steht,
wobei der Ansaugkrümmer aufweist:
eine Befestigungsflanschabschnitt (46), der eine Kontaktfläche (46a) zum Berühren der Kontaktfläche des Befestigungsteils aufweist,
das die Schritte aufweist:
Vorbereiten des Ansaugkrümmers, der eine Wirbelsteuerventilvorrichtung (50) aufweist, die am Befestigungsflanschabschnitt des Ansaugkrümmers vorgesehen ist, wobei das Wirbelsteuerventil aus einem Ventilelement (52), einem Ventilschaft (54) zum Halten des Ventilelements und einem Antriebselement (56) zum drehenden Antreiben des Ventilelements über den Ventilschaft konfiguriert ist, und ein Lagerelement (58), das den Ventilschaft drehbar hält und so angeordnet ist, dass es zwischen dem ersten Einlasskanal und dem zweiten Einlasskanal angeordnet ist, wenn der Ansaugkrümmer am Befestigungsteil befestigt ist;
Bilden des Zylinderkopfes durch Gießen unter Verwendung einer Form (80) durch Bilden eines ersten und zweiten Einlasskanals (322, 323), die sich an einem Ende zum ersten und zweiten brennraumkonfigurierenden ausgesparten Abschnitt öffnen und sich am anderen Ende zur Kontaktfläche öffnen, und
Bilden eines ausgesparten Abschnitts (35) in dem Abschnitt des Befestigungsteils, der einem Raum zwischen dem ersten und dem zweiten Einlasskanal entspricht, unter Verwendung eines Teils der Form, wobei sich der ausgesparte Abschnitt in die Richtung öffnet, in die die Bodenfläche des Bodenwandabschnitts weist; und
Befestigen des Ansaugkrümmers am Zylinderkopf.

## Revendications

1. Moteur à combustion interne (1) comprenant une culasse (20, 20A) et un collecteur d'admission (4),
la culasse présentant :
une section de paroi inférieure (24) ayant une première et une deuxième sections en retrait configurant une chambre de combustion (24a) formées pour configurer une chambre de combustion (CC) ;
des sections de parois latérales (26) prévues pour entourer la section de paroi inférieure ;
une partie de fixation (27) prévue sur une (26a) des sections de parois latérales s'étendant dans la direction d'agencement de la première et de la deuxième sections en retrait configurant une chambre de combustion, pour la fixation du collecteur d'admission (4), et présentant un plan de contact (27a) avec le collecteur d'admission,
le collecteur d'admission comprenant
une section de bride de fixation (46) présentant un plan de contact (46a) pour contacter le plan de contact de la partie de fixation,
où
un dispositif de soupape de commande de tourbillon (50) est prévu sur la section de bride de fixation du collecteur d'admission, la soupape de commande de tourbillon étant constituée d'un élément de soupape (52), d'une tige de soupape (54) pour supporter l'élément de soupape, et d'un actionneur (56) pour entraîner en rotation l'élément de soupape par l'intermédiaire de la tige de soupape ;
le collecteur d'admission comporte un élément de palier (58) supportant rotativement la tige de soupape ;
un premier et un deuxième passages d'admission (322, 323) sont prévus, ouverts à une extrémité sur la première et la deuxième sections en retrait configurant une chambre de combustion et ouverts sur le plan de contact à l'autre extrémité, de sorte que l'élément de palier du collecteur d'admission est disposé entre le premier passage d'admission et le deuxième passage d'admission quand le collecteur d'admission fixé à la partie de fixation ; et
une section en creux (35) est formée dans le segment de la partie de fixation correspondant à un espace entre le premier et le deuxième passages d'admission, ladite section en creux étant ouverte dans une direction d'opposition à une surface de fond de la section de paroi inférieure.

2. Moteur à combustion interne (1) selon la revendication 1,
où la culasse (20, 20A) est formée par coulée dans un moule (80), et
la section en creux (35) est prévue pour être formée au moyen d'une partie du moule.

3. Moteur à combustion interne (1) selon la revendication 2, où
la culasse (20, 20A) est formée par moulage sous pression où un métal fondu composé d'un alliage d'aluminium est comprimé dans le moule (80).

4. Moteur à combustion interne (1) selon l'une des revendications 1 à 3, où
la culasse (20, 20A) comprend en outre :
une troisième et une quatrième sections en retrait configurant une chambre de combustion (24a) destinées à configurer une chambre de combustion (CC) formée sur la section de paroi inférieure (24) ; et
un troisième et un quatrième passages d'admission (321, 324) ouverts à une extrémité sur la troisième et la quatrième sections en retrait configurant une chambre de combustion, et ouverts sur le plan de contact (27a) à l'autre extrémité, où
la troisième et la quatrième sections en retrait configurant une chambre de combustion sont disposées en série par rapport à la première et à la deuxième sections en retrait configurant une chambre de combustion (24a), de sorte que la première et la deuxième sections en retrait configurant une chambre de combustion sont intercalées entre celles-ci, et
le troisième et le quatrième passages d'admission sont disposés en série par rapport au premier et au deuxième passages d'admission (322, 323), de sorte que le premier et le deuxième passages d'admission sont intercalés entre ceux-ci.

5. Moteur à combustion interne (1) selon l'une des revendications 2 à 4, où
la section en creux (35) est prévue pour présenter une rainure évidée (35A) dans la direction de retrait du moule (80) .

6. Moteur à combustion interne (1) selon la revendication 5, où une pluralité des rainure évidées (35A) sont formées.

7. Moteur à combustion interne (1) selon l'une des revendications 1 à 6, comprenant en outre
des injecteurs (14) fixés au premier et au deuxième passage d'admission (322, 323) de la culasse,
ledit moteur à combustion interne étant prévu pour injecter du carburant par les injecteurs vers l'admission circulant entre le premier et le deuxième passages d'admission de la culasse, et introduire le gaz de mélange de l'admission et du carburant dans la chambre de combustion (CC).

8. Procédé de fabrication d'un moteur à combustion interne (1) comprenant une culasse (20, 20A) et un collecteur d'admission,
la culasse présentant
une section de paroi inférieure (24) ayant une première et une deuxième sections en retrait configurant une chambre de combustion (24a) formées pour configurer une chambre de combustion (CC), des sections de parois latérales (26) prévues pour entourer la section de paroi inférieure, une partie de fixation (27) prévue sur une (26a) des sections de parois latérales s'étendant dans la direction d'agencement de la première et de la deuxième sections en retrait configurant une chambre de combustion, et présentant un plan de contact (27a) avec un collecteur d'admission,
le collecteur d'admission comprenant
une section de bride de fixation (46) présentant un plan de contact (46a) pour contacter le plan de contact de la partie de fixation,
ledit procédé comprenant les étapes suivantes :
préparation du collecteur d'admission comportant un dispositif de soupape de commande de tourbillon (50) prévu sur la section de bride de fixation du collecteur d'admission, la soupape de commande de tourbillon étant constituée d'un élément de soupape (52), d'une tige de soupape (54) pour supporter l'élément de soupape, et d'un actionneur (56) pour entraîner en rotation l'élément de soupape par l'intermédiaire de la tige de soupape, et
un élément de palier (58) supportant rotativement la tige de soupape et disposé de manière à être intercalé entre le premier passage d'admission et le deuxième passage d'admission quand le collecteur d'admission est fixé à la partie de fixation ;
formation de la culasse par coulée dans un moule (80) en formant le premier et le deuxième passages d'admission (322, 323) ouverts à une extrémité sur la première et la deuxième sections en retrait configurant une chambre de combustion et ouverts sur le plan de contact à l'autre extrémité, et
formation d'une section en creux (35) dans le segment de la partie de fixation correspondant à un espace entre le premier et le deuxième passages d'admission, ladite section en creux étant ouverte dans une direction d'opposition à une surface de fond de la section de paroi inférieure ; et fixation du collecteur d'admission à la culasse.
